# EUROPÄISCHE PATENTSCHRIFT

(11) **EP 3 204 552 B1**
(45) Veröffentlichungstag und Bekanntmachung des Hinweises auf die Patenterteilung: **05.06.2019**
(21) Anmeldenummer: 15777899.4
(22) Anmeldetag: 28.09.2015
(51) Int. Cl.: D21H 11/20, C08B 16/00, D01F 2/00, D01F 2/10, D21H 21/40

(54) **WERT- ODER SICHERHEITSPRODUKT, REGENERATCELLULOSE, DEREN HERSTELLUNG UND VERWENDUNG SOWIE FASERLOSES PAPIERMATERIAL**
VALUE OR SECURITY PRODUCT, REGENERATED CELLULOSE, PRODUCTION AND USE OF SAME, AND FIBERLESS PAPER MATERIAL
PRODUIT DE VALEUR OU DE SÉCURITÉ, CELLULOSE RÉGÉNÉRÉE, SA FABRICATION ET SON UTILISATION ET MATIÈRE DU TYPE PAPIER SANS FIBRES

(30) Priorität: 07.10.2014 DE 102014220289
(43) Veröffentlichungstag der Anmeldung: 16.08.2017
(73) Patentinhaber: Bundesdruckerei GmbH, 10969 Berlin (DE)
(72) Erfinder: MUTH, Oliver, 12277 Berlin (DE); PAESCHKE, Manfred, 16348 Wandlitz (DE); SIEGMANN, Rebekka, 13353 Berlin (DE)
(74) Vertreter: Patentanwälte Bressel und Partner mbB
(86) Internationale Anmeldenummer: PCT/EP2015/072269
(87) Internationale Veröffentlichungsnummer: WO 2016/055297

(56) Entgegenhaltungen:
- US-A- 6 080 277
- ALEXANDER BÖHM ET AL: "Photo-attaching functional polymers to cellulose fibers for the design of chemically modified paper", CELLULOSE, KLUWER ACADEMIC PUBLISHERS (DORDRECHT), NL, Bd. 20, Nr. 1, 2. November 2012 (2012-11-02), Seiten 467-483, XP035163198, ISSN: 1572-882X, DOI: 10.1007/S10570-012-9798-X

## Beschreibung

### Gebiet der Erfindung:

Die vorliegende Erfindung betrifft ein Wert- oder Sicherheitsprodukt, ferner mit kovalent gebundenen, insbesondere langkettigen, chemischen Resten modifizierte Regeneratcellulose, mit der das Wert- oder Sicherheitsprodukt hergestellt ist, ein Verfahren zum Herstellen der modifizierten Regeneratcellulose, deren Verwendung als Trägermaterial in dem Wert- oder Sicherheitsprodukt sowie ein faserloses Papiermaterial, das aus der modifizierten Regeneratcellulose hergestellt ist.

### Hintergrund der Erfindung:

Wert- oder Sicherheitsdokumente, beispielsweise Banknoten, Identifikationsdokumente, wie Pässe, Ausweise, Führerscheine, Berechtigungsnachweise, sowie Sicherheitsetiketten, können aus verschiedenen Materialien hergestellt sein, beispielsweise aus Polymeren oder natürlich vorkommenden Materialien, wie Cellulose. Beispielsweise werden Banknoten meist aus Cellulose hergestellt, die aus Baumwolle oder Leinen gewonnen wird (beispielsweise DE 40 40 347 A1). Es gibt aber auch Banknoten, die aus einem Polymer bestehen (DE 10 2010 024 459 A1). Ferner ist es auch üblich, diverse Sicherheitsdokumente aus Papier oder aus papierähnlichen Materialien herzustellen, beispielsweise Reisepässe, wobei die zur Anbringung von Sichtvermerken (Visa) vorgesehenen Seiten aus Papier gebildet sind. In etlichen Fällen werden außerdem Innenlagen aus Papier verwendet.

Für die Papierherstellung werden pflanzliche Faserstoffe als Ausgangsmaterial verwendet, wobei die in dem Ausgangsmaterial enthaltene Cellulose als Hauptbestandteil für die Papierproduktion eingesetzt wird. Als Ausgangsmaterialien dienen Holz, Leinen, Baumwolle und andere pflanzliche Rohstoffe, aus denen die Cellulose herausgelöst wird. Diese wird in Wasser aufgeschlämmt (Pulpe) und in Papiermaschinen zu Blattgut entwässert. Zur weiteren Verwendung wird dieses Rohpapier veredelt, indem zur Herstellung von dessen Bedruckbarkeit beispielsweise eine Oberflächenleimung aufgebracht wird. Des Weiteren kann die Oberfläche zur weiteren Optimierung des Druckes auch mit einer Streichfarbe (Pigmentstrich) versehen werden. Darüber hinaus können der Pulpe übliche Füllstoffe, Additive, Nassfestmittel, Farbstoffe und dergleichen zugegeben werden, um gewünschte Eigenschaften des Papiers zu erreichen. Als Füllstoffe können beispielsweise Kaolin, Calciumcarbonat, Talg, Titandioxid, Alumosilikate und dergleichen zugegeben werden. Darüber hinaus können der Pulpe auch die Authentifizierung des Papiermaterials sichernde Elemente zugegeben werden, beispielsweise Melierfasern, Planchetten, Sicherheitsfäden und dergleichen. Zudem können in dem Papier bei dessen Herstellung auch Wasserzeichen erzeugt werden.

Für die Herstellung von Cellulosefasern hat es sich als vorteilhaft herausgestellt, Regeneratfasern aus natürlich nachwachsenden Rohstoffen zu erzeugen. Hierbei handelt es sich um Fasern aus einem Material, das mit einem chemischen Verfahren veredelt ist. Nach dem Viskoseverfahren und nach dem Lyocell®-Verfahren (Marke von Lenzing AG, AT) hergestellte Fasern bestehen aus Cellulose. Für die Produktion von Modalfasern, die nach einem modifizierten Viskoseverfahren hergestellt werden, wird ausschließlich Buchenholz verwendet.

Für das Lyocell®-Verfahren wird die aus dem pflanzlichen Rohstoff erhaltene Cellulose mit einem tertiären Aminoxid aufgelöst, das zusätzlich Wasser enthält. Aus dieser Lösung wird die Cellulose ausgefällt und dabei versponnen. Nach US 4,416,698 A wird eine Cellulose enthaltende Lösung eines tertiären Aminoxids, beispielsweise N-Methylmorpholin-N-oxid, und Wasser durch Spinndüsen gepresst und in ein Wasserbad geleitet, wobei die Cellulose in Form feinster Fäden koaguliert. Dabei wird das Spinngut gleichzeitig gereckt, um verbesserte mechanische Eigenschaften zu erreichen. Es wird angegeben, dass mit diesem Verfahren Folien und Fasern herstellbar sind.

Gemäß US 6,258,304 B1 wird ferner ein Verfahren angegeben, mit dem Cellulosefasern zusätzlich mit Polyester-, Polyamid- oder Polyolefinmaterial angereichert werden. Hierzu wird eine Mischung aus Cellulose und einem entsprechenden Polymer mit einem niedrigen Schmelzpunkt in der Lösung des tertiären Aminoxids nach dem vorstehend angegebenen Verfahren durch eine Spinndüse oder einen Folienblaskopf gepresst. Dadurch wird erreicht, dass die Cellulosefasern langgestreckte Bereiche des Polymers enthalten.

Aus DE 100 05 163 A1 geht ein Verfahren zur Herstellung und Verarbeitung einer Celluloselösung hervor, bei dem Cellulose in einem tertiären Aminoxid-Pyrrolidonat gelöst, anschließend verformt, koaguliert wird und das Lösungsmittel anschließend entfernt wird.

Die US 6,080,277 A beschreibt Celluloseteilchen und deren Herstellung, die im Innern kationische Gruppe im Innern aufweisen.

Der Artikel von Alexander Böhm et al, "Photo-attaching functional polymers to cellulose fibers for the design of chemically modified paper", CELLULOSE, KLUWER ACADEMIC PUBLISHERS (DORDRECHT), NL, (20121102), vol. 20, no. 1, doi:10.1007/S10570-012-9798-X, ISSN 1572-882X, pages 467 - 483, beschreibt die Herstellung von mit Hilfe von Polymeren modifizierten und chemisch mikrostrukturierten Papiersubstraten. Hierbei werden photochemisch funktionelle Polymere an Cellulose-Mikrofasern in Modell-Filterpapieren angefügt.

Über die Herstellung von mit Polymer modifizierten und chemisch mikrostrukturierten Papiersubstraten mittels photochemischer Anlagerung funktioneller Polymere wird von A.Böhm, M. Gattermayer, C.Trieb, S.Schabel, D.Fiedler, F.Miletzky, M.Biesalski: "Photo-attaching Functional Polymers to Cellulose Fibers for the Design of Chemically Modified Paper" in: Cellulose (2013) 20:467-483 berichtet. Die funktionellen Polymere sind durch Polymethylmethacrylat gebildet, wobei dieses Polymer zusätzlich copolymerisierte Monomer-Einheiten von 4-Methacryloxybenzophenon und eines mit Fluorescein modifizierten Methacryloxy-Derivats enthält. Es wird über die chemische Anlagerung der Polymere an Cellulose-Mikrofasern berichtet, wobei die Polymere unter Einwirkung von UV-Strahlung in einer radikalischen Reaktion an die Cellulose-Mikrofasern gebunden werden. In diesem Fachartikel wird hierzu beispielhaft angegeben, dass aus Baumwoll-Lintersstoff hergestelltes Filterpapier mit einer Lösung der entsprechenden Acryl-Polymere getränkt und nach dem Trocknen mit UV-Strahlung beaufschlagt wurde.

Zwar ist die Verwendung von Papier oder von zu Papier ähnlichen Produkten aus Umweltgesichtspunkten wünschenswert. Jedoch ist die Herstellung von Papieren für Wert- oder Sicherheitsprodukte mit den bekannten Verfahren sehr aufwändig. Für eine Bedruckbarkeit dieser Papiere mit sehr guter Qualität müssen außerdem zusätzliche Veredelungsschritte vorgesehen werden.

### Der Erfindung zugrunde liegende Aufgabe:

Von daher liegt der vorliegenden Erfindung die Aufgabe zugrunde, ein zumindest papierähnliches Material zu schaffen, das den Anforderungen an die Umweltverträglichkeit genügt und zudem nicht die weiteren Probleme bekannter Papiermaterialien aufweist. Insbesondere soll das Material verhältnismäßig leicht herstellbar sein und eine Bedruckbarkeit und Verdruckbarkeit mit sehr guter Qualität ermöglichen. Darüber hinaus muss das Papier für Wert- und Sicherheitsprodukte den einschlägig bekannten Anforderungen an Haltbarkeit, Farbechtheit, Robustheit gegenüber mechanischer Beanspruchung genügen und gleichzeitig die Möglichkeit bieten, sogenannte Reagenz- und/oder Indikatorstoffe bzw. -formulierungen aufzunehmen, die eine chemischphysikalische Manipulation erkennbar machen.

### Zusammenfassung der Erfindung:

Diese Aufgaben werden gemäß einem ersten Aspekt der vorliegenden Erfindung mit einem Wert- oder Sicherheitsprodukt gelöst, das ein Trägermaterial aufweist, das aus einer mit kovalent gebundenen, vorzugsweise langkettigen, chemischen Resten modifizierten Regeneratcellulose hergestellt ist, wobei die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

Diese Aufgaben werden gemäß einem zweiten Aspekt der vorliegenden Erfindung auch mit mit kovalent gebundenen, vorzugsweise langkettigen, chemischen Resten modifizierter Regeneratcellulose gelöst, wobei die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

Diese Aufgaben werden gemäß einem dritten Aspekt der vorliegenden Erfindung außerdem mit einem Verfahren zum Herstellen von mit kovalent gebundenen, vorzugsweise langkettigen, chemischen Resten modifizierter Regeneratcellulose gelöst, wobei die chemischen Reste Verbindungsreste von Polymeren sind, die durch radikalische Polymerisation von jeweils mindestens eine ethylenische Doppelbindung enthaltenden Verbindungen erhalten werden und die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

Diese Aufgaben werden gemäß einem vierten Aspekt der vorliegenden Erfindung auch mit einer Verwendung von mit kovalent gebundenen, vorzugsweise langkettigen, chemischen Resten modifizierter Regeneratcellulose als Trägermaterial in einem Wert- oder Sicherheitsprodukt gelöst, wobei die chemischen Reste Verbindungsreste von Polymeren sind, die durch radikalische Polymerisation von jeweils mindestens eine ethylenische Doppelbindung enthaltenden Verbindungen erhalten werden und die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

Diese Aufgaben werden gemäß einem fünften Aspekt der vorliegenden Erfindung auch mit einem faserlosen Papiermaterial aus mit kovalent gebundenen, vorzugsweise langkettigen, chemischen Resten modifizierter Regeneratcellulose gelöst, wobei die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

### Definitionen:

Soweit in der nachfolgenden Erfindungsbeschreibung und in den Ansprüchen der Begriff 'Alkyl' verwendet wird, ist darunter ein linearer oder verzweigtkettiger einwertiger Kohlenwasserstoffrest mit vorzugsweise ein bis zwölf Kohlenstoffatomen zu verstehen, der optional mit einem oder mehreren Substituenten substituiert sein kann. Beispielsweise handelt es sich um Methyl (-CH₃), Ethyl (-CH₂CH₃), Prop-1-yl (-CH₂CH₂CH₃), Prop-2-yl (-CH(CH₃)₂), But-1-yl (-CH₂CH₂CH₂CH₃), 2-Methylprop-1-yl (-CH₂CH(CH₃)₂), But-2-yl (-CH(CH₃)CH₂CH₃), 2-Methylprop-2-yl (-C(CH₃)₃), Pent-1-yl (-CH₂CH₂CH₂CH₂CH₃), Pent-2-yl (-CH(CH₃)CH₂CH₂CH₃), Pent-3-yl (-CH(CH₂CH₃)₂), 2-Methylbut-2-yl (-C(CH₃)₂CH₂CH₃), 3-Methylbut-2-yl (-CH(CH₃)CH(CH₃)₂), 3-Methylbut-1-yl (-CH₂CH₂CH(CH₃)₂), 2-Methylbut-1-yl (-CH₂CH(CH₃)CH₂CH₃), Hex-1-yl (-CH₂CH₂CH₂CH₂CH₂CH₃), Hex-2-yl (-CH(CH₃)CH₂CH₂CH₂CH₃), Hex-3-yl (-CH(CH₂CH₃)CH₂CH₂CH₃), 2-Methylpent-2-yl (-C(CH₃)₂CH₂CH₂CH₃), 3-Methylpent-2-yl (-CH(CH₃)CH(CH₃)CH₂CH₃), 4-Methylpent-2-yl (-CH(CH₃)CH₂CH(CH₃)₂), 3-Methylpent-3-yl (-C(CH₃)(CH₂CH₃)₂), 2-Methylpent-3-yl (-CH(CH₂CH₃)CH(CH₃)₂), 2,3-Dimethylbut-2-yl (-C(CH₃)₂CH(CH₃)₂), 3,3-Dimethylbut-2-yl (-CH(CH₃)C(CH₃)₃) und dergleichen.

Soweit in der nachfolgenden Erfindungsbeschreibung und in den Ansprüchen der Begriff 'Alkylen' verwendet wird, ist darunter ein gesättigter linearer oder verzweigtkettiger zweiwertiger Kohlenwasserstoffrest mit vorzugsweise ein bis zwölf Kohlenstoffatomen zu verstehen, der optional mit einem oder mehreren Substituenten substituiert sein kann. Beispielsweise handelt es sich um Methylen (-CH₂-), Ethylen (-CH₂CH₂-) und Propylen (-CH₂CH₂CH₂-).

Soweit in der nachfolgenden Erfindungsbeschreibung und in den Ansprüchen der Begriff 'Aryl' verwendet wird, ist darunter ein einwertiger aromatischer Kohlenwasserstoffrest mit vorzugsweise 6 bis 20 Kohlenstoffatomen zu verstehen, der durch die Entfernung eines Wasserstoffatoms von einem einzelnen Kohlenstoffatom des zugrunde liegenden aromatischen Ringsystems abgeleitet ist. Aryl schließt auch bicyclische und polycyclische Reste ein, die an einen gesättigten, teilweise ungesättigten oder aromatischen carbocyclischen Ring kondensiert sind. Typischerweise schließt Aryl Reste ein, beispielsweise Phenyl oder die von substituierten Benzolen, Naphthalin, Anthracen, Biphenyl, Indenyl, Indanyl, 1,2-Dihydronaphthalin, 1,2,3,4-Tetrahydronaphthalin und dergleichen abgeleitet sind. Aryl kann substituiert sein.

Soweit in der nachfolgenden Erfindungsbeschreibung und in den Ansprüchen der Begriff 'substituiert' verwendet wird, ist darunter der Ersatz eines H-Atoms durch einen anderen chemischen Rest zu verstehen, insbesondere durch -Hal (-F, -Cl, -Br, -I), -R¹, -OR², -COOR², -NR²R³, -R⁴-OH, -R⁴-COOH, -R⁴-NR²R³, wobei R¹ für Alkyl oder Aryl steht, wobei R², R³ unabhängig voneinander für H, Alkyl, Aryl stehen und wobei R⁴ für Alkylen steht.

### Detaillierte Beschreibung der Erfindung:

Die erfindungsgemäßen Wert- oder Sicherheitsprodukte sind aus der mit kovalent gebundenen chemischen Resten modifizierten Regeneratcellulose hergestellt. Es handelt sich vorzugsweise um Banknoten, Identifikations(ID)-Dokumente, wie Passdokumente, Ausweise, Führerscheine, Fahrzeugscheine, Berechtigungsnachweise, ferner Sicherheitsetiketten, die zur Authentifizierung der Echtheit von Produkten dienen, und dergleichen. Diese Wert- oder Sicherheitsprodukte können demnach Dokumente sein, die Personen oder Sachen individualisieren, oder wie Banknoten oder dergleichen (Aktien, Zertifikate und dergleichen) dazu dienen, als Wertdokumente einen Anspruch auf Herausgabe eines Produktes oder die Erbringung einer Dienstleistung zu verifizieren. Ein erfindungsgemäßes Wert- oder Sicherheitsprodukt kann demnach auch ein Sicherheitselement (Transferelement) sein, beispielsweise ein Aufkleber, Haftetikett (beispielsweise zur Artikelsicherung) oder dergleichen, das mit einem Vorprodukt eines Wert- oder Sicherheitsdokuments oder eines anderen Artikels, beispielsweise mit einem zu markierenden Produkt, dessen Echtheit zu garantieren ist, unlösbar verbunden werden kann, um das Wert- oder Sicherheitsdokument oder diesen markierten Artikel zu bilden.

Das Wert- oder Sicherheitsprodukt kann ausschließlich oder im Wesentlichen ausschließlich aus der modifizierten Regeneratcellulose hergestellt sein, oder die modifizierte Regeneratcellulose stellt nur einen Teil des Materials dar, aus dem das Wert- oder Sicherheitsprodukt gebildet ist. Beispielsweise kann das Wert- oder Sicherheitsprodukt einlagig sein, wobei diese Lage aus der modifizierten Regeneratcellulose gebildet ist. Alternativ kann die Lage auch aus der modifizierten Regeneratcellulose und einem weiteren Material, beispielsweise einem Polymer, gebildet sein, wobei diese beiden Materialien zusammen eine Mischung (Blend, Polymerlegierung) bilden, aus der die Lage besteht. Nochmals alternativ dazu kann das Wert- oder Sicherheitsprodukt mehrlagig sein, wobei eine oder mehrere Lagen aus der modifizierten Regeneratcellulose und gegebenenfalls weiteren Materialien gebildet sind und weitere Lagen beispielsweise aus einer Polymerlage, etwa aus Polymerfolien und/oder -lacken, oder Papier hergestellt sind. Die einzelnen Lagen können durch Coextrusion, Laminieren, Lackieren, Verkleben, Beschichten oder mit noch anderen Verfahren miteinander verbunden werden. Die einzelnen Lagen können opak oder transluzent oder transparent, gefärbt oder farblos sein, wobei jede Lage unabhängig von den anderen Lagen ausgebildet sein kann. Das Wert- oder Sicherheitsprodukt kann eine beliebige Form oder Größe aufweisen, Standardnormmaße sind beispielsweise das ID1-, ID2- oder ID3-Format. Das Produkt kann in Karten oder Heftform vorliegen.

Als weitere Polymere, die zusammen mit dem Regeneratcellulose-Material das Wert- oder Sicherheitsprodukt bilden, entweder in einer Mischung mit der modifizierten Regeneratcellulose oder als separate Lage neben einer Lage aus modifizierter Regeneratcellulose und gegebenenfalls weiteren Stoffen, können folgende Materialien eingesetzt werden: Polycarbonat (PC), insbesondere Bisphenol A-Polycarbonat, Polyethylenterephthalat (PET), deren Derivate, wie Glykol-modifiziertes PET (PET-G), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder herkömmliches Papier (aus unveränderten Cellulosefasern gebildet). Die vorstehenden Angaben beziehen sich sowohl auf miteinander zu verbindende Folien als auch auf Flüssigformulierungen, die auf ein Vorprodukt aufgebracht werden, wie einen Schutzlack.

Das Wert- oder Sicherheitsprodukt weist irgendeines der üblichen Sicherheitsmerkmale auf, die die Echtheit des Produktes dokumentieren, beispielsweise Sicherheitsfäden, Sicherheitsdrucke, lichtbeugende Elemente, wie Kippbilder und Hologramme, fluoreszierende Farben, Wasserzeichen, eine elektronische Schaltung mit der Möglichkeit, Daten kontaktlos oder über elektrische Kontakte speichern und wieder auslesen zu können, Durchsichtspasser, Mikroschrift, Prägedrucke, optisch variable Pigmente und dergleichen.

Das erfindungsgemäße Herstellverfahren für die mit kovalent gebundenem Polymer modifizierte Regeneratcellulose umfasst die folgenden Verfahrensschritte:
(a) Mischen von Cellulose mit einer tertiären Aminoxid-Verbindung und Wasser;
(b) Chemisches Binden der chemischen Reste, die vorzugsweise langkettig sind, an die in der Mischung enthaltene Cellulose unter Ausbildung der mit den kovalent gebundenen chemischen Resten modifizierten Regeneratcellulose; und
(c) Ausfällen der in (b) erhaltenen modifizierten Regeneratcellulose aus der Mischung.

In einer besonders bevorzugten Ausführungsform der vorliegenden Erfindung wird die modifizierte Regeneratcellulose nach dem sogenannten Aminoxid-Verfahren hergestellt, d.h. die aus dem Rohstoff gewonnene Cellulose wird in einer Lösung, vorzugsweise wässrigen Lösung, einer tertiären Aminoxid-Verbindung gelöst oder emulgiert/dispergiert und dann nach Durchführung des Verfahrensschrittes (b) aus der Lösung oder Mikroemulsion wieder ausgefällt, vorzugsweise unter Formgebung. Im Gegensatz zu dem bekannten Aminoxid-Verfahren wird Cellulose nicht unmodifiziert ausgefällt sondern in der Lösung oder Mikroemulsion chemisch modifiziert, wobei chemische Reste, die vorzugsweise langkettig sind, an die Cellulose-Einheiten chemisch gebunden werden. Damit werden vorteilhafte chemische und physikalische Eigenschaften geschaffen, die sich von denjenigen bekannter Materialien unterscheiden, bei denen Cellulose und ein Polymer, wie in US 6,258,304 B1 oder DE 10 2006 040 771 B3 angegeben, lediglich in einer physikalischen Mischung vorliegen. Durch die chemische Bindung des oder der chemischen Reste an die Cellulose-Einheiten werden sehr homogene chemische und physikalische Eigenschaften des Materials erreicht, die denjenigen der bekannten Mischungen mit Polymeren eindeutig überlegen sind.

Mit dem Material ist eine hervorragende Bedruckbarkeit und Verdruckbarkeit von damit hergestelltem Blattgut erreichbar. Insbesondere kann eine sehr glatte und die Druckfarbe gut und gleichmäßig mit hervorragender Farbbrillanz aufnehmende Oberfläche des Bedruckstoffes hergestellt werden. Denn durch eine gezielte Auswahl der an die Cellulose gebundenen chemischen Reste kann bewirkt werden, dass die Druckfarbe zum einen nicht in nennenswertem Maße in die Oberfläche eindringt und daher auf der Oberfläche des Bedruckstoffes weitgehend vollständig erhalten bleibt und zum anderen eine gute Benetzung des Materials mit der Folge einer festen Haftung auf der Oberfläche erreicht wird, wobei gleichzeitig eingestellt werden kann, dass die Druckfarbe im Wesentlichem am Auftragsort verbleibt und damit ebenfalls für eine hohe Farbdichte sorgt. Dies wird vor allem durch die gezielte homogene Veredelung des Cellulosematerials mit den chemischen Resten erreicht. Hierzu wird eine hochgradig molekulare chemische Verknüpfungsreaktion eingesetzt, während die Cellulosefasern bei dem von A.Böhm et al. beschriebenen Verfahren in einer heterogenen Zubereitung chemisch modifiziert werden, sodass diese chemische Modifizierung ausschließlich die Oberfläche der Cellulosefasern betrifft.

Darüber hinaus ist, je nach dem verwendeten lang- oder kurzkettigen chemischen Rest, im Vergleich zu herkömmlichem Papier eine außergewöhnlich hohe Einreißfestigkeit, Feuchtdehnung, Nassfestigkeit und Bruchlast des Materials einstellbar. Die hervorragende Bedruckbarkeit der erfindungsgemäßen Regeneratcellulose wird auch ohne den üblichen Pigmentstrich erreicht.

Ein wesentlicher Vorteil des erfindungsgemäßen Herstellungsverfahrens gegenüber bekannten Verfahren zur Erzeugung von Blattgut aus unmodifizierter Cellulose enthaltendem Material besteht zudem darin, dass lediglich eine verhältnismäßig geringe Menge an Wasser für die Herstellung der Zubereitung aus Cellulose und der tertiären Aminoxid-Verbindung erforderlich ist, während bei der klassischen Papierherstellung große Wassermengen für die Aufschlämmung des Zellstoffes eingesetzt werden und das Wasser anschließend unter Einsatz von erheblichem Energieaufwand wieder entfernt werden muss, wobei das entfernte Wasser zudem wiederaufbereitet werden muss. Beispielsweise besteht die Papierpulpe bei der herkömmlichen Papierherstellung zu ca. 95% aus Wasser und nur zu ca. 5% aus dem Feststoff. Bei dem erfindungsgemäßen Verfahren ist der Anteil von das Blattgut schließlich bildendem Feststoffmaterial in der Zubereitung, die für dessen Herstellung verwendet wird, dagegen deutlich höher, sodass viel weniger Wasser für die Herstellung des modifizierten Cellulosematerials eingesetzt und schließlich aus dem System wieder zu entfernen ist.

Das erfindungsgemäße Herstellungsverfahren ist daher umweltfreundlich, weil es nur einen geringen Rohstoff- und Energieeinsatz erfordert. Außerdem wird hochwertiges Blattgut produziert, das für den vorgesehenen Verwendungszweck als Trägermaterial in einem Sicherheits- oder Wertprodukt in idealer Weise geeignet ist.

Der Rohstoff für die zu verwendende Cellulose kann jegliches pflanzliches Material sein. Typischerweise wird Holzschliff aus beliebigen Holzsorten eingesetzt, um Zellstoff zu erzeugen. Vorteilhafterweise wird Fichten-, Tannen-, Kiefern-, Lärchen- oder Eukalyptusholz verwendet. Alternativ kann auch Cellulose aus Leinen und Baumwolle eingesetzt werden. Cellulose wird in bekannter Weise aus diesen Rohstoffen gewonnen.

Zur Herstellung der erfindungsgemäßen modifizierten Regeneratcellulose wird Cellulose (Zellstoff) mit einer tertiären Aminoxid-Verbindung gemischt, sodass eine homogene Zubereitung, insbesondere eine chemische Lösung, entsteht.

Die tertiäre Aminoxid-Verbindung kann ein Oxid eines Trialkylamins oder eines tertiären Alkyl-cycloaliphatischen Amins sein, beispielsweise Dimethylethanolaminoxid, Triethylaminoxid, N-Methylmorpholin-N-oxid, N-Methylpiperidin-N-oxid, N-Methylhomopiperidin-N-oxid, N-Methylpyrrolidin-N-oxid, Di-(N-methyl)cyclohexylamin-N-oxid, und Dimethylbenzylamin-N-oxid. In einer bevorzugten Ausführungsform der vorliegenden Erfindung ist die tertiäre Aminoxid-Verbindung N-Methylmorpholin-N-oxid.

Zur Herstellung der Mischung der Cellulose mit der tertiären Aminoxid-Verbindung werden diese Stoffe vorzugsweise zusammen mit Wasser vermischt. Überschüssiges Wasser kann beispielsweise durch Abziehen im Vakuum entfernt werden, um eine homogene Zubereitung (insbesondere Lösung) zu bilden. Das Masseverhältnis der Mischung der Cellulose zur tertiären Aminoxid-Verbindung beträgt vorzugsweise 1 : 1, kann aber auch davon abweichen. Beispielsweise kann das Masseverhältnis der Mischung (Cellulose zu tertiärer Aminoxid-Verbindung) im Bereich von 2 : 1 bis 1 : 2 liegen.

Alternativ kann die Cellulose unter erhöhter Temperatur in der tertiären Aminoxid-Verbindung gelöst werden. Zur Auflösung kann zusätzlich in der tertiären Aminoxid-Verbindung enthaltenes Hydratwasser beitragen. Zur Unterstützung des Auflösens kann zusätzlich eine weitere Amin-Verbindung oder können auch mehrere weitere Amin-Verbindungen verwendet werden, die zusammen mit der tertiären Aminoxid-Verbindung mit Cellulose vermischt werden. Als weitere Amin-Verbindungen sind hierfür beispielsweise γ-Butyrolacton und Pyrrolidon, geeignet.

N-Methylmorpholin-N-oxid (NMMO) bildet ein bei Raumtemperatur stabiles Monohydrat, das bei 118-119 °C schmilzt, wobei sich eine wässrige Lösung bildet. Cellulose kann in einer Ausführungsform bei einer Temperatur oberhalb dieses Schmelzpunktes mit dem NMMO-Monohydrat vermischt werden, wobei sich zusammen mit der dabei gebildeten wässrigen Lösung eine homogene Regeneratcellulose-Mischung bildet, die als chemische Lösung vorliegt.

Zur Herstellung der mit kovalent gebundenen chemischen Resten modifizierten Regeneratcellulose wird die in der tertiären Aminoxid-Verbindung und gegebenenfalls Wasser gelöste Cellulose mit einer Verbindung umgesetzt, die chemische Reste enthält, die vorzugsweise langkettig sind, wobei die chemischen Reste an die Cellulose gebunden werden, vorzugsweise auf die Cellulose aufgepfropft werden (Grafting). Hierzu wird vorzugsweise eine radikalische Reaktion angewendet, die unter Einwirkung von elektromagnetischer Strahlung, insbesondere Ultraviolettstrahlung, abläuft.

Die lang- oder kurzkettigen chemischen Reste sind vorzugsweise Oligomer- oder Polymerreste. Sie werden an die Glucose-Einheiten der Cellulose vorzugsweise chemisch kovalent gebunden. Die Polymerreste sind chemische Reste einer Polymerkette. Die Oligomerreste sind chemische Reste einer Oligomerkette. Grundsätzlich sind beliebige Polymer- oder Oligomerreste an die Cellulose bindbar. Insbesondere können die Polymere Homopolymere und Copolymere sein, wobei die Copolymere statistische Copolymere, alternierende Copolymere, Gradientcopolymere, Blockcopolymere und Pfropfcopolymere sein können. Entsprechendes gilt für Oligomere. Erfdinungsgemäß handelt es sich um organische Polymere/Oligomere. Denkbar, jedoch nicht erfindungsgemäß, sind auch anorganische Polymere/Oligomere, wie Silikone, Polysiloxane und Polysilazane. Die Polymer-/Oligomerreste werden vorzugsweise in einer radikalischen Polymerisationsreaktion gebildet.

Erfindungsgemäß sind die an die Cellulose angelagerten chemischen Reste Verbindungsreste von Polymerverbindungen. Die Polymerverbindungen werden aus (Monomer-)Verbindungen erhalten, die jeweils mindestens eine ethylenische Doppelbindung enthalten. Die jeweils mindestens eine ethylenische Doppelbindung enthaltenden (Monomer-)Verbindungen sind in einer bevorzugten Weiterbildung der vorliegenden Erfindung ausgewählt aus einer Gruppe, umfassend Acrylsäure und deren Derivate, Methacrylsäure und deren Derivate, Styrol und dessen Derivate, Alkene, wie Ethen, Propen, Buta-1,3-dien und Isobuten, ferner halogenierte Alkene, wie Vinylchlorid, 2-Chlor-1,3-butadien, Vinylidenfluorid und Tetrafluorethylen, sowie weitere Vinylverbindungen, wie Vinylacetat und Vinylpyrrolidon. Die Derivate von Acrylsäure und Methacrylsäure sind bevorzugt deren Ester, nämlich Alkylester, Arylester, Alkylarylester und Arylalkylester, Amide, Sulfonamide, Anhydride und Nitrile. Unter anderem sind unter den Derivaten Verbindungen zu verstehen, bei denen die das Polymer-Grundgerüst bildende Gruppe -(CH=CH)- bzw. -(C(CH₃)=CH)-substituiert ist. Beispielsweise ist daher auch Zimtsäure als eine mögliche Ausführungsform eingeschlossen. Es ist möglich, dass die chemischen Reste aus mehreren der vorgenannten (Monomer-)Verbindungen gebildet sind, entweder als statistische, alternierende Copolymere-, Gradient-, Block- oder Pfropfcopolymere.

In einer besonders bevorzugten Ausführungsform der vorliegenden Erfindung wird Polymer verwendet, das aus einem Acryl- und/oder Methacrylsäureester, ganz besonders bevorzugt aus Acrylsäuremethylester und/oder Methacrylsäuremethylester, gebildet ist.

Der Polymerisations-/Oligomerisationsgrad der Polymer-/Oligomerreste liegt vorzugsweise bei mindestens 10, weiter bevorzugt bei mindestens 50, noch weiter bevorzugt bei mindestens 100 und am meisten bevorzugt bei mindestens 500. Der Polymerisations-/Oligomerisationsgrad liegt vorzugsweise bei maximal 20.000, weiter bevorzugt bei maximal 10.000, noch weiter bevorzugt bei maximal 5.000 und am meisten bevorzugt bei maximal 2.000.

In einer weiteren bevorzugten Ausführungsform der vorliegenden Erfindung enthalten die chemischen Reste jeweils mindestens einen kovalent gebundenen Linker, über den die den chemischen Rest enthaltende langkettige Verbindung an die Cellulose gebunden wird. Hierzu wird vorzugsweise ein Linker eingesetzt, mit dem eine vorzugsweise durch elektromagnetische Strahlung aktivierbare Monomereinheit gebildet wird, sodass das Polymer über diese Einheit(en) an die Cellulose gebunden wird. Eine derartige Monomereinheit kann beispielsweise einen ein Biradikal bildenden Linker enthalten. Durch die Einwirkung der elektromagnetischen Strahlung wird das Biradikal gebildet, sodass das Biradikal an die Cellulose bindet.

Die den chemischen Resten, insbesondere Polymerresten, zugrunde liegenden chemischen Verbindungen, insbesondere Polymerverbindungen, werden mittels des Linkers an die Cellulose gebunden. Hierzu werden die chemischen Reste, insbesondere Polymerreste, vorzugsweise unter Einwirkung von Ultraviolettstrahlung an die Cellulose chemisch gebunden. Durch Einwirkung von Ultraviolettstrahlung kann der Linker beispielsweise in ein Biradikal umgewandelt werden, das sich mit einem radikalischen Reaktionszentrum an die Cellulose bindet, indem beispielsweise ein H-Atom von einer Glucose-Einheit der Cellulose abgespalten und dafür der Linker an die Glucose-Einheit chemisch gebunden wird.

Aufgrund der Möglichkeit der Durchführung der Bindung der chemischen Reste an die Cellulose unter Einwirkung von Ultraviolettstrahlung ist es für die Durchführung der chemischen Bindung der Polymer-/Oligomerreste an die Cellulose nicht erforderlich, der Reaktionsmischung Wärme zuzuführen. Daher wird vermieden, dass die Reaktionsführung zur Bildung der Regeneratcellulose aus der Lösung oder Mikroemulsion durch Temperaturveränderung gestört wird. Die Reaktion kann beispielsweise bei Raumtemperatur durchgeführt werden.

In einer bevorzugten Weiterbildung der vorliegenden Erfindung ist der mindestens eine Linker, der beispielsweise durch elektromagnetische Strahlung zur Erzeugung eines Biradikals befähigt ist, an einen das Grundgerüst des Polymers oder Oligomers bildenden chemischen Rest gebunden, beispielsweise an einen Acryl- oder Methacrylrest, der mit weiteren entsprechenden Resten das Grundgerüst des Polymers oder Oligomers bildet. Beispielsweise kann der Linker durch einen aromatischen Ketonrest gebildet sein, der beispielsweise über eine Esterbindung an den das Grundgerüst bildenden chemischen Rest gebunden ist. Weiter bevorzugt kann der Linker durch einen unsubstituierten oder substituierten Benzophenonrest gebildet sein. Ganz besonders bevorzugt ist der Linker ein unsubstituiertes Benzoylphenyl, insbesondere Benzoylphen-4-yl oder Benzoylphen-2-yl, oder ein an einem oder beiden aromatischen Ringen mit weiteren Ringsubstituenten substituiertes Benzoylphenyl. Bevorzugte weitere Substituenten sind danach ausgewählt, dass sie die Biradikalbildung durch Stabilisierung begünstigen und/oder dass sie zu einer Absorption des Molekülrestes in einem geeigneten UV-Wellenlängenbereich führen. Beispielsweise kann der Benzoylphenylrest in den, vorzugsweise langkettigen, chemischen Rest eingefügt werden, indem eine (Monomer-)Verbindung hergestellt wird, die diesen Linker enthält, und diese Linker-(Monomer-)Verbindung mit den weiteren (Monomer-)Verbindungen, die dem langkettigen oder kurzkettigen chemischen Rest zugrunde liegen, zur Herstellung der chemischen Verbindung umgesetzt wird. Beispielsweise kann der Benzoylphenyl-Rest in die chemische Verbindung eingeführt werden, indem ein diesen Rest enthaltendes polymerisierbares Monomer hergestellt wird, zum Beispiel durch Veresterung von Acrylsäure oder Methacrylsäure mit 4-Hydroxybenzophenon (oder 2-Hydroxybenzophenon), und dieses Monomer mit Acrylsäure und/oder Methacrylsäure und/oder deren Derivaten polymerisiert wird.

Durch Festlegung eines Mischungsverhältnisses des Anteils von Monomer-Einheiten in dem Polymer-/Oligomerrest, die einen Linker aufweisen (Linker-(Monomer-)Einheiten), zu allen Monomer-Einheiten in dem Polymer-/Oligomerrest kann die Dichte der den Linker aufweisenden Monomer-Einheiten in den Polymer-/Oligomerresten gesteuert werden. Vorzugsweise beträgt dieser Anteil mindestens 0,1 Linker-Einheiten in 100 Monomer-Einheiten des Polymer-/Oligomerrestes, weiter bevorzugt mindestens 1 Linker-Einheit in 100 Monomer-Einheiten des Polymer-/Oligomerrestes und am meisten bevorzugt mindestens 5 Linker-Einheiten in 100 Monomer-Einheiten des Polymer-/Oligomerrestes. Vorzugsweise beträgt dieser Anteil maximal 40 Linker-Einheiten in 100 Monomer-Einheiten des Polymer-/Oligomerrestes, weiter bevorzugt maximal 20 Linker-Einheiten in 100 Monomer-Einheiten des Polymer-/Oligomerrestes und am meisten bevorzugt maximal 10 Linker-Einheiten in 100 Monomer-Einheiten des Polymer-/Oligomerrestes. Durch die Steuerung des Anteils der Linker-Einheiten in dem Polymer-/Oligomerrest wird die Verknüpfungsdichte des Polymer-/Oligomerrestes mit der Cellulose eingestellt: Je größer dieser Anteil ist, desto dichter liegen die Verknüpfungsstellen mit der Cellulose beieinander. Bei einer niedrigen Verknüpfungsdichte wird den Polymer-/Oligomerresten ermöglicht, sich weitgehend frei in den die Cellulose umgebenden Raum zu erstrecken, während eine hohe Verknüpfungsdichte eine enger anliegende Hülle der Polymer-/Oligomerreste an der Cellulose erzwingt. Allerdings wird mit einer erhöhten Dichte der Linker-Einheiten in den Polymer-/Oligomerresten auch eine Verknüpfung der Polymer-/Oligomerreste untereinander begünstigt, sodass die freie Beweglichkeit der Polymer-/Oligomerreste dann auch von daher eingeschränkt sein kann. Falls eine hohe Verknüpfungsdichte der Polymer-/Oligomerreste mit der Cellulose und der Polymer-/Oligomerreste untereinander vorliegt, wird deren Funktion als Kolloidstabilisierung verringert.

In einer weiteren bevorzugten Weiterbildung der vorliegenden Erfindung enthält zumindest einer der chemischen Reste, insbesondere Polymer-/Oligomerreste, einen kovalent gebundenen zur Lumineszenz befähigten chemischen Rest, sodass eine Cellulose, die mit einem chemischen Rest, der einen zur Lumineszenz befähigten chemischen Rest enthält, modifiziert ist, optisch sichtbar gemacht werden kann, wenn die Lumineszenz im sichtbaren Spektralbereich liegt. Andernfalls (bei Lumineszenz beispielsweise im UV- oder IR-Spektralbereich) ist die Lumineszenz entweder maschinell erkennbar oder kann mit einem Strahlungswandler auch für das menschliche Auge sichtbar gemacht werden. Falls die Lumineszenz im sichtbaren Spektralbereich liegt, braucht dem damit hergestellten Papiermaterial kein Aufheller zugegeben zu werden. Die dadurch erhaltene Aufhellung ist nicht auswaschbar und somit gegen Auslaugen beständig.

Zur Bildung eines lumineszenzfähigen chemischen Restes kann ein chemischer Rest eines organischen Fluoreszenzfarbstoffes, wie Fluoreszein, Xylenolorange, 7-Hydroxycumarin und Pyranin, verwendet werden. Diese Verbindungen können zunächst beispielsweise mit einem polymerisierbaren Monomer umgesetzt, beispielsweise in einer Veresterungsreaktion oder unter Carbonsäureamid-Bildung mit Acrylsäure oder Methacrylsäure, und der entstandene Ester oder das entstandene Amid zusammen mit weiteren jeweils mindestens eine ethylenische Doppelbindung enthaltenden Verbindungen zu dem Polymer/Oligomer umgesetzt werden.

Durch Festlegung eines Mischungsverhältnisses des Anteils von Monomer-Einheiten in dem chemischen Rest, insbesondere Polymer-/Oligomerrest, die den lumineszenzfähigen chemischen Rest aufweisen, zu allen Monomer-Einheiten in dem Polymer-/Oligomerrest kann die Dichte der den lumineszenzfähigen chemischen Rest aufweisenden Monomer-Einheiten in den chemischen Resten gesteuert werden. Vorzugsweise beträgt dieser Anteil 1 Lumineszenzrest-Monomer-Einheit in 100 Monomer-Einheiten des chemischen Restes bis 10 Lumineszenzrest-Monomer-Einheiten in 100 Monomer-Einheiten des chemischen Restes. Durch die Steuerung des Anteils der Lumineszenzrest-Monomer-Einheiten in dem chemischen Rest wird die Intensität der Lumineszenz der mit dem chemischen Rest modifizierten Cellulose eingestellt: Je größer dieser Anteil ist, desto stärker ist die Lumineszenzintensität bei einer Anregung zur Lumineszenz.

In einer weiteren bevorzugten Weiterbildung der vorliegenden Erfindung enthält zumindest einer der chemischen Reste, insbesondere Polymer-/Oligomerreste, einen kovalent gebundenen im sichtbaren Spektralbereich zur Absorption von elektromagnetischer Strahlung befähigten chemischen Rest, sodass eine Cellulose, die mit einem chemischen Rest, der einen zur spektralen Absorption befähigten chemischen Rest enthält, modifiziert ist, optisch sichtbar gemacht werden kann. Wie im Falle von lumineszenzfähigen chemischen Resten können auch die zur spektralen Absorption befähigten Reste beispielsweise durch chemische Umsetzung von Acrylsäure oder Methacrylsäure mit einem Farbstoff in den Polymer-/Oligomerrest integriert werden, wenn der Farbstoff eine für eine Veresterungsreaktion verfügbare Hydroxylgruppe oder zur Carbonsäureamid-Bildung verfügbare primäre oder sekundäre Aminfunktion aufweist. Das damit gebildete Acrylsäure- oder Methacrylsäure-Derivat wird dann zusammen mit weiteren jeweils mindestens eine ethylenische Doppelbindung enthaltenden Verbindungen zu dem Polymer/Oligomer umgesetzt.

Zur Durchführung der Bindung der chemischen Reste an die gelöste Cellulose werden die entsprechenden langkettigen oder kurzkettigen Verbindungen, beispielsweise Polymere oder Oligomere, in der tertiären Aminoxid/Cellulose-Lösung gelöst oder dispergiert, wobei sich eine Lösung oder Mikroemulsion bildet.

Zur Stabilisierung einer Mikroemulsion gegen Koagulation kann diese zusätzlich Stabilisatoren enthalten. Die Stabilisierung gegen Koagulation kann mittels sterischer und/oder elektrostatischer Wirkung erreicht werden. Insbesondere vermögen die Stabilisatoren ein Kolloid mittels sterischer Effekte zu stabilisieren. Zur Stabilisierung von Kolloiden werden typischerweise amphipathische Blockcopolymere eingesetzt, d.h. Blockcopolymere, deren beide Enden unterschiedliche Eigenschaften aufweisen (Ullmann's Encyclopedia of Chemical Industry, Electronic Release 2014, Wiley Verlag, Kapitel "Colloids"). Die Stabilisatoren sind hierzu zum einen vorzugsweise aus Monomer-Einheiten gebildet, die den Stabilisator an die zu dispergierenden Teilchen, insbesondere die langkettigen oder kurzkettigen Verbindungen, binden, und zum anderen aus Monomer-Einheiten, die die erforderliche Stabilisierung der Mikroemulsion gegen Koagulation gewährleisten. Die erstgenannten Monomer-Einheiten sind in der Lösung des tertiären Aminoxids im Allgemeinen nicht löslich, haben aber eine chemische Affinität zu den zu dispergierenden Teilchen. Die letztgenannten Monomer-Einheiten sind in der Lösung des tertiären Aminoxids löslich und verleihen den stabilisierten Teilchen die erforderliche Abstoßung gegeneinander, damit sie sich nicht zusammenlagern. Falls die Lösung des tertiären Aminoxids wässrig ist, eignen sich grundsätzlich Blockcopolymere aus Styrol- und Ethylenoxid-Monomeren, in denen die Styrol-Einheiten zur Bindung an die zu dispergierenden Teilchen und die Ethylenoxid-Einheiten zur Stabilisierung gegen Koagulation dienen. Im Falle einer nicht-wässrigen Lösung des tertiären Aminoxids können Blockcopolymere aus Styrol- und Acrylnitril-Monomeren eingesetzt werden. In diesem Falle dienen die Acrylnitril-Einheiten zur Bindung an die zu dispergierenden Teilchen und die Styrol-Einheiten zur Stabilisierung der Mikroemulsion.

Durch die Stabilisierung der Mikroemulsion werden nano- oder mikroskalige kolloidale Teilchen gebildet, die in Form von Mizellen aus Blockcopolymeren vorliegen und die Cellulose und vor allem die langkettigen Verbindungen einschließen.

In einer bevorzugten Ausführungsform der vorliegenden Erfindung sind die zur Stabilisierung der Mikroemulsion dienenden Stabilisatoren Tenside, besonders bevorzugt nichtionische Tenside. Eine ganz besonders bevorzugte Ausführungsform von Tensiden sind Alkylpolyglucoside, die nichtionische Tenside sind. Die Alkylpolyglucoside sind aus Fettalkoholen und Glucose hergestellt.

Die Alkylpolyglucoside können zusammen mit Co-Tensiden verwendet werden, beispielsweise langkettigen Alkoholen, ethoxylierten Co-Tensiden, Estern und Ethern.

Die Kettenlänge der langkettigen Alkohole (Co-Tenside) liegt vorzugsweise bei mindestens 5 Methylen- oder Methin-Resten, besonders bevorzugt bei mindestens 10 und am meisten bevorzugt bei mindestens 15 Methylen- oder Methin-Resten. Die Länge kann maximal bis zu 50 Methylen- oder Methin-Reste betragen. Je länger die Kette ist, desto wirksamer ist die Stabilisierungseigenschaft des Stabilisators, d.h. die Menge an Stabilisator und Co-Tensid kann geringer eingestellt werden, um dieselbe Wirkung zu erreichen. Die langkettigen Alkohole können gesättigt oder ungesättigt, unverzweigt oder verzweigt sein. Besonders gute geeignete Alkohole sind Geraniol und 1-Octanol. Möglich sind auch mehrwertige Alkohole, beispielsweise Diole, wie 1,2-Octandiol.

Als ethoxylierte Co-Tenside können ethoxylierte Alkohole eingesetzt werden (CₙEOₘ).

Als Ester (Co-Tenside) können Fettsäureester von Polyolen eingesetzt werden, beispielsweise Sorbitanmonolaurat, Glycerinmonooleat und Trigylcerindiisostearat.

Als Ether (Co-Tenside) können Monoether aus Glycerin und verzweigten Alkylresten und Diether aus Glycerin mit Alkylresten unterschiedlicher Kettenlänge verwendet werden.

In einer anderen ganz besonders bevorzugten Ausführungsform können die Tenside ABA-Blockcopolymere sein, wobei die B-Einheiten durch Polyethylenoxid-Einheiten und die A-Einheiten durch zwei Polyhydroxystearinsäure- oder zwei Polyoxyethylen-(20)-sorbitanmonooleat- oder zwei Propylenglycolmonoalkylether (CₙPOₘ)-Einheiten gebildet werden. Alternative Ethylenoxid- und Propylenoxid-freie nichtionische Tenside sind beispielsweise Sucroseester, Dodecanoyloxy-2-hydroxypropylsuccinat und Alkyldimethylphosphinoxide.

Des Weiteren können zur Stabilisierung einer Mikroemulsion der Cellulose und der langkettigen Verbindungen in der Aminoxid-Lösung amphiphile Blockcopolymere, beispielsweise Poly(ethylen-propylen)-co-Poly(ethylenoxid)-Copolymere oder Poly(ethylenoxid)-co-Poly(butylenoxid)-Copolymere, eingesetzt werden. Alternativ können auch Alkylethoxylate, beispielsweise C₁₂EO₁₀-C₁₂EO₄₇₇ oder Blockcopolymere mit anderem Ethoxylierungsgrad oder anderer Alkyl-Kettenlänge, verwendet werden.

Darüber hinaus sind alle üblichen Tenside und dazu passenden Co-Tenside einsetzbar, beispielsweise Alkylethoxylate, Alkylsulfate, polypropoxylierte Sulfate, alkylpolypropoxylierteethoxylierte Sulfate, Lecithin sowie kationische Tenside.

Bezüglich der Stabilisatoren und Co-Tenside wird im Übrigen auf Ullmann's Encyclopedia of Chemical Industry, Electronic Release 2014, Wiley Verlag, Kapitel "Microemulsions" und die darin genannten Zitate, insbesondere in den Kapiteln 4., 4.1, 4.3 und 4.8 verwiesen, wobei diese Textstellen und die darin genannten Literaturzitate hiermit vollumfänglich, zumindest jedoch hinsichtlich der darin genannten Verbindungen und Verbindungsklassen in die vorliegende Anmeldung durch Referenzierung aufgenommen werden.

Zur Herstellung der modifizierten Regeneratcellulose wird die aus dem Rohstoff gewonnene Cellulose mit der tertiären Aminoxid-Verbindung, gegebenenfalls Wasser und weiteren Verbindungen vermischt und gegebenenfalls erwärmt. Dabei entsteht eine Lösung der Cellulose in der tertiären Aminoxid-Verbindung oder Mischung aus der tertiären Aminoxid-Verbindung und Wasser und gegebenenfalls weiteren Flüssigkeiten. Gegebenenfalls wird Wasser aus der Lösung abgezogen, um eine homogene Zubereitung zu erzeugen. Die den anzubindenden langkettigen oder kurzkettigen chemischen Resten zugrunde liegende chemische Verbindung, die die Linker-Einheiten enthält, wird zusammen mit Cellulose in der die tertiäre Aminoxid-Verbindung enthaltenden Lösung oder nach der Auflösung der Cellulose in der tertiären Aminoxid-Verbindung, gegebenenfalls in Mischung mit Wasser und gegebenenfalls weiteren Additiven, wie den Stabilisatoren und/oder Lösungsvermittlern, vermischt. Hierzu kann die tertiäre Aminoxid-Verbindung vorzugsweise in einem Lösungsmittel, beispielsweise Toluol, gelöst verwendet werden. Dabei entsteht eine Lösung oder Mikroemulsion der Cellulose, der tertiären Aminoxid-Verbindung und der langkettigen und/oder kurzkettigen Verbindungen, gegebenenfalls zusammen mit Wasser und gegebenenfalls weiteren Flüssigkeiten, wobei zur Stabilisierung der Mikroemulsion oder zur Lösungsvermittlung die vorstehend genannten Stabilisatoren zusätzlich zugegeben werden können.

Die derart gebildete Zubereitung wird dann mit elektromagnetischer Strahlung, vorzugsweise Ultraviolettstrahlung, photochemisch behandelt. Dadurch findet die Reaktion des Linkers mit der Cellulose statt, sodass die langkettigen und/oder kurzkettigen Reste an die Cellulose kovalent binden.

In einer bevorzugten Ausführungsform der vorliegenden Erfindung wird die derart hergestellte modifizierte Regeneratcellulose mit Wasser aus der Zubereitung (Lösung/Mikroemulsion) ausgefällt. Hierzu wird die Regeneratcellulose-Zubereitung, die wie zuvor beschrieben erhalten worden ist, dann mit Wasser in Kontakt gebracht, sodass die modifizierte Regeneratcellulose ausfällt.

Zur Ausfällung und Formgebung wird die die modifizierte Regeneratcellulose enthaltende Zubereitung in einer bevorzugten Ausführungsform der vorliegenden Erfindung auf einen porösen Träger, vorzugsweise ein poröses Trägerband, beispielsweise ein Stoff- oder Polymergewebe oder -sieb, gegossen, sodass die modifizierte Regeneratcellulose aus der Mischung ausgefällt wird, wobei sich ein blattartiges Gut bildet. Hierzu kann der auf den Träger aufgebrachte Film mit Wasser befeuchtet oder besprüht werden. Wenn das poröse Trägerband mit der sich darauf bildenden modifizierten Regeneratcellulose ferner auch durch ein Wasserbad gefahren wird, werden die tertiäre Aminoxid-Verbindung und weitere Bestandteile der Lösung/Mikroemulsion abgetrennt, sodass der Film aus der modifizierten Regeneratcellulose zurückbleibt. Anschließend kann das Trägerband mit der darauf befindlichen modifizierten Regeneratcellulose getrocknet werden, wobei ein papierähnliches Blattgut in Form eines druckbaren Synthesepapiers gebildet wird, das von dem Trägerband abgenommen werden kann. Dieser Vorgang kann wie bei der herkömmlichen Papierherstellung mit Heißlufttrocknern, Kalanderwalzen und Trockenfilzbändern durchgeführt werden.

Alternativ kann die Regeneratcellulose-Zubereitung auch durch eine Düse in ein Wasserfällbad gepresst werden, wobei die modifizierte Regeneratcellulose in Form von Fasern ausfällt, die zu einem Filz oder Garn weiterverarbeitet werden können.

In einer bevorzugten Ausführungsform der vorliegenden Erfindung kann die modifizierte Regeneratcellulose auch in Form von dreidimensionalen Objekten geformt werden, indem die Regeneratcellulose-Mischung durch die Düse in das Wasserfällbad auf einen dreidimensional steuerbaren Tisch befördert wird und sich sukzessive auf dem dreidimensional bewegbaren Tisch durch Ausfällung lagenweise zu dem dreidimensionalen Objekt aufbaut.

Zur näheren Veranschaulichung der vorliegenden Erfindung dienen die nachfolgenden Figuren und Beispiele, wobei die Figuren und Beispiele lediglich exemplarischen Charakter haben und keine Einschränkung hinsichtlich der Tragweite der beschriebenen Erfindung haben:
In Fig. 1 ist ein Wert- oder Sicherheitsdokument in einer Schnittdarstellung schematisch wiedergegeben, wobei diese Darstellung das Dokument nicht in den Größenverhältnissen eines tatsächlichen Exemplars zeigt.
Fig. 2 zeigt einen Teil einer Vorrichtung zur Herstellung von Blattgut aus erfindungsgemäß modifizierter Regeneratcellulose in einer schematischen Seitenansicht.

Das Wert- oder Sicherheitsdokument ist beispielsweise eine Banknote 100. Diese Banknote ist aus einer zentralen Dokumentenlage 110 und zwei außenseitigen Dokumentenlagen 120 gebildet. Die zentrale Dokumentenlage ist aus Blattgut gebildet, das aus der erfindungsgemäßen modifizierten Regeneratcellulose erzeugt ist. Diese Dokumentenlage kann zusätzlich zu der modifizierten Regeneratcellulose auch Füllstoffe enthalten, sodass die Dokumentenlage opak ist. Durch die Farbe der Füllstoffe wird die Farbe der Dokumentenlage festgelegt, beispielsweise weiß. Außerdem kann diese zentrale Dokumentenlage auch Melierfasern, Planchetten oder andere feinteilige Materialien enthalten, die für das Dokument eine Echtheitsgarantie anzeigen. Die außenseitigen Dokumentenlagen sind beispielsweise durch Schutzlackschichten, zum Beispiel aus einem Polycarbonat-Lack gebildet. Diese Schichten sind transparent. Auf der zentralen Dokumentenlage sind Druckschichten 150 mit hervorragender Farbbrillianz erzeugt. In das Material der zentralen Dokumentenlage ist außerdem ein Sicherheitsfaden 160 eingelagert. Dieser ist bereits bei der Herstellung des Blattgutes aus der modifizierten Regeneratcellulose in die ausgefällte Regeneratcellulose-Masse eingelegt worden und ist daher mit dieser fest verbunden.

Nachfolgend wird das Verfahren zum Herstellen der modifizierten Regeneratcellulose beispielhaft erläutert:

### Beispiel 1: Herstellung der Synthesepapier-Zubereitung aus photoreaktivem Copolymer und Cellulose

Das photoreaktive Polymer (langkettige Verbindung mit photochemisch aktivierbaren Gruppen) wird über freie radikalische Copolymerisation mit thermischer Initiierung, z.B. mit Azo-bis-(isobutyronitril) (AIBN), erhalten. Als hauptsächliches Comonomer treten gängige Monomere wie Methacrylate oder Styrol auf. In geringen Mengen wird zusätzlich 4-Benzoylphenylmethacrylat copolymerisiert. Außerdem können zusätzlich sehr geringe Mengen an Monomeren mit fluoreszierenden Seitenketten eingebaut werden. Das Copolymerverhältnis von gängigem Monomer zu 4-Benzoylphenylmethacrylat beträgt 5 : 1 bis 100 : 1, vorzugsweise 10 : 1 bis 20 : 1. Es entsteht ein Polymer mit der Strukturformel I, wobei die Einbeziehung von lumineszierenden Gruppen nicht gezeigt ist.

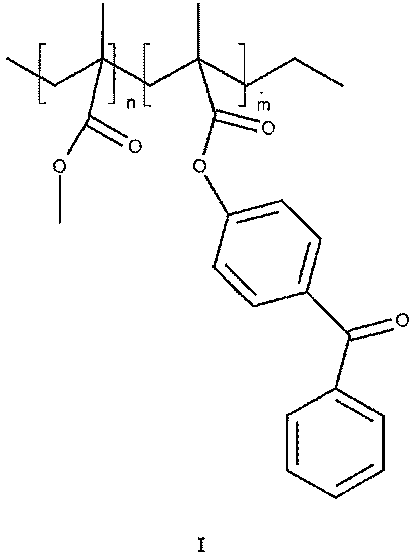

Die mit Index n bezeichneten Monomerreste (Methacrylsäuremethylester) bilden den Hauptteil des Polymers und die mit Index m bezeichneten Monomerreste (4-Benzoylphenylmethacrylat) den Teil, der den Linker (Benzoylphenyl-Rest) zur kovalenten Bindung an die Cellulose enthält.

Zellstoff (Cellulose) wird zerkleinert und mit *N*-Methylmorpholin-*N*-Oxid (NMMO) und Wasser vermischt. Das Masseverhältnis von Wasser zu NMMO orientiert sich dabei an den Mengen des sogenannten Lyocell®-Produktionsprozesses (Marke von Lenzing AG, AT). In der Regel wird ein Masseverhältnis von 1 : 1 verwendet. In einem Rührkessel wird unter Vakuum und bei erhöhter Temperatur solange Wasser entfernt, bis sich eine homogene Cellulose-NMMO-Wasserlösung ergibt. In einem zweiten Schritt wird das photoreaktive Copolymer mit den Benzoylphenyleinheiten gelöst, zum Beispiel in Toluol, und zur Cellulose-NMMO-Wasserlösung zugegeben. Außerdem wird ein Stabilisator zugegeben, beispielsweise ein Alkylpolyglucosid.

Das Ergebnis ist eine Zubereitung, vorzugsweise eine Mikroemulsion, aus Cellulose, Wasser, NMMO, Toluol und photoreaktivem Copolymer.

### Beispiel 2: Photochemische Reaktion der Synthesepapier-Zubereitung

Die gemäß Beispiel 1 hergestellte Zubereitung wird durch einen UV-durchlässigen Mikroreaktor gepumpt (im einfachsten Falle ein Rohr aus Quarzglas) und dabei gleichzeitig UV-Strahlung, beispielsweise mit einer Wellenlänge von 350 nm, ausgesetzt. Die Benzoylphenyl-Einheit geht dabei in ein Biradikal über. Die Radikalfunktion am Sauerstoff abstrahiert ein Wasserstoffatom der Cellulose. Die resultierende Radikalfunktion an der Cellulose rekombiniert mit der Radikalfunktion an der Benzoylphenyleinheit. Als Ergebnis ist das Copolymer über die Benzoylphenyleinheit kovalent an Cellulose gebunden. Die Dosis und die Durchlaufgeschwindigkeit sind dabei experimentell zu optimieren. Der Reaktionsmechanismus der Reaktion von photoreaktivem Copolymer mit Cellulose bei UV-Strahlung ist nachfolgend im Schema I angegeben.

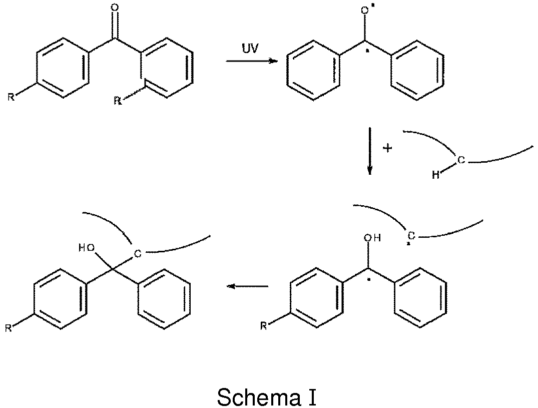

### Beispiel 3: Drucken der Synthesepapier-Zubereitung

Die gemäß Beispiel 2 hergestellte und photochemisch behandelte Zubereitung kann ähnlich wie in einer Papierfabrik auf ein poröses Band gegossen werden und dabei mit Wasser befeuchtet bzw. besprüht werden. Spätestens jetzt fällt das Synthesepapier aus der Lösung aus, sodass das Lösemittelgemisch Wasser/NMMO davon getrennt werden kann. Das poröse Transportband kann durch ein Wasserbad fahren, um restliche Lösemittelbestandteile zu entfernen. Über eine entsprechende Kombination von Heißlufttrocknung, Kalanderwalzen und Trockenfilzbändern kann das Synthesepapier in die gewünschte Konfektionsform umgewandelt werden.

Eine weitere Druckalternative besteht darin, die Papierlösung durch eine Düse in ein Wasser-Fällbad auf einen dreidimensional steuerbaren Tisch zu befördern, um so 3D-Synthesepapier-Strukturen zu formen.

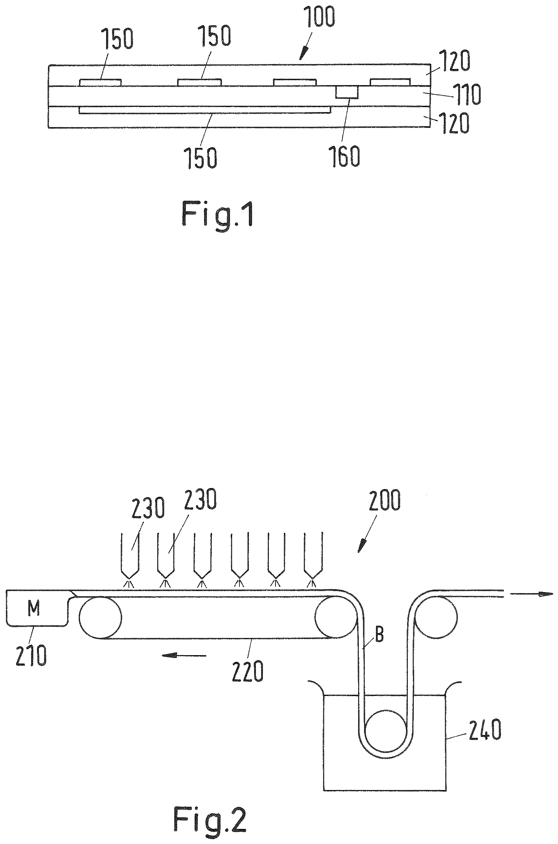

Eine zur Herstellung von Blattgut einsetzbare Vorrichtung 200 ist in Fig. 2 wiedergegeben. Die die modifizierte Regeneratcellulose enthaltende Mischung M ist in einem Auftragsbehälter 210 enthalten. Von dem Auftragsbehälter gelangt die Mischung auf ein umlaufendes poröses Band 220 aus einem Gewebe, beispielsweise aus Polypropylen, und wird auf diesem in einer dünnen Schicht verteilt. Über Düsen 230, die oberhalb des Bandes angeordnet sind, wird Wasser auf die Schicht der Mischung gesprüht. Dabei fällt die modifizierte Regeneratcellulose als dünne Lage B aus. Diese Lage kann am Ende des umlaufenden Bandes von diesem abgehoben werden und als selbstragende Folie in ein Wasserbad 240 hineingeführt und danach wieder aus diesem herausgeführt werden. In dem Wasserbad werden die unerwünschten Bestandteile des Blattgutes, insbesondere die tertiäre Aminoxid-Verbindung herausgelöst. Anschließend gelangt die Blattgutfolie in eine Trocknerstrecke (nicht dargestellt).

### Bezugszeichen

- 100: Wert- oder Sicherheitsdokument, Banknote
- 110: zentrale Dokumentenlage
- 120: außenseitige Dokumentenlage
- 150: Druckschicht
- 160: Sicherheitsfaden
- 200: Blattgutherstellvorrichtung
- 210: Auftragsbehälter
- 220: poröses Band
- 240: Wasserbad
- B: Lage aus modifizierter Regeneratcellulose
- M: Mischung, enthaltend erfindungsgemäße modifizierte Regeneratcellulose

## Patentansprüche

1. Wert- oder Sicherheitsprodukt (100), aufweisend ein Trägermaterial (110), das aus einer mit kovalent gebundenen chemischen Resten modifizierten Regeneratcellulose hergestellt ist,
**dadurch gekennzeichnet, dass** die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

2. Mit kovalent gebundenen chemischen Resten modifizierte Regeneratcellulose,
**dadurch gekennzeichnet, dass** die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

3. Verfahren zum Herstellen von mit kovalent gebundenen chemischen Resten modifizierter Regeneratcellulose, wobei die chemischen Reste Verbindungsreste von Polymeren sind, die durch radikalische Polymerisation von jeweils mindestens eine ethylenische Doppelbindung enthaltenden Verbindungen erhalten werden und die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate, umfassend:
(a) Mischen von Cellulose mit einer tertiären Aminoxid-Verbindung und Wasser;
(b) Chemisches Binden der chemischen Reste an die in der Mischung enthaltene Cellulose unter Ausbildung der mit den kovalent gebundenen chemischen Resten modifizierten Regeneratcellulose;
(c) Ausfällen der in (b) erhaltenen modifizierten Regeneratcellulose aus der Mischung.

4. Verfahren nach Anspruch 3, **dadurch gekennzeichnet, dass** die tertiäre Aminoxid-Verbindung N-Methylmorpholin-N-oxid ist.

5. Verfahren nach einem der Ansprüche 3 und 4, **dadurch gekennzeichnet, dass** die chemischen Reste jeweils mindestens einen kovalent gebundenen Linker enthalten, der durch elektromagnetische Strahlung zur Erzeugung eines Biradikals befähigt ist.

6. Verfahren nach Anspruch 5, **dadurch gekennzeichnet, dass** der mindestens eine Linker durch Benzoylphenyl gebildet ist.

7. Verfahren nach Anspruch 6, **dadurch gekennzeichnet, dass** die Polymerreste unter Einwirkung von Ultraviolettstrahlung an die Cellulose chemisch gebunden werden.

8. Verfahren nach einem der Ansprüche 3 bis 7, **dadurch gekennzeichnet, dass** zumindest einer der chemischen Reste einen kovalent gebundenen zur Lumineszenz befähigten chemischen Rest enthält.

9. Verfahren nach einem der Ansprüche 3 bis 8, **dadurch gekennzeichnet, dass** die modifizierte Regeneratcellulose mit Wasser aus der Mischung ausgefällt wird.

10. Verfahren nach einem der Ansprüche 3 bis 9, **dadurch gekennzeichnet, dass** die die modifizierte Regeneratcellulose enthaltende Mischung auf einen porösen Träger gegossen wird, sodass die modifizierte Regeneratcellulose aus der Mischung ausgefällt wird, wobei sich ein blattartiges Gut (B) bildet.

11. Verwendung von mit dem Verfahren gemäß einem der Ansprüche 3 bis 10 hergestellter Regeneratcellulose, die mit kovalent gebundenen chemischen Resten modifiziert ist, als Trägermaterial (110) in einem Wert- oder Sicherheitsprodukt (100).

12. Faserloses Papiermaterial aus mit kovalent gebundenen chemischen Resten modifizierter Regeneratcellulose,
**dadurch gekennzeichnet, dass** die chemischen Reste Verbindungsreste von Polymeren sind, die durch radikalische Polymerisation von jeweils mindestens eine ethylenische Doppelbindung enthaltenden Verbindungen erhalten werden, wobei die jeweils mindestens eine ethylenische Doppelbindung enthaltenden Verbindungen ausgewählt sind aus einer Gruppe, umfassend Acrylsäure und deren Derivate, Methacrylsäure und deren Derivate, Styrol und dessen Derivate, Alkene und deren Derivate sowie halogenierte Alkene und deren Derivate.

## Claims

1. Value or security product (100), comprising a carrier material (110), which is manufactured from a regenerated cellulose modified with covalent bonded chemical residues,
**characterised in that** the chemical residues are compound residues of polymers, which are obtained by radical polymerisation of compounds which in each case contain at least one ethylenic double bond, wherein the compounds containing in each case at least one ethylenic double bond are selected from a group comprising acrylic acid and its derivatives, methacrylic acid and its derivatives, styrene and its derivatives, alkenes and their derivatives, and halogenated alkenes and their derivatives.

2. Regenerated cellulose modified with covalent bonded chemical residues, **characterised in that** the chemical residues are compound residues of polymers, the compounds are obtained by radical polymerisation of in each case at least one ethylenic double bond, wherein the compounds containing in each case at least one ethylenic double bond are selected from a group comprising acrylic acid and its derivatives, methyl acrylic acid and its derivatives, styrene and its derivatives, alkenes and their derivatives, and halogenated alkenes and their derivatives.

3. Method for producing regenerated cellulose modified with covalent bonded chemical residues, wherein the chemical residues are compound residues of polymers which are obtained by radical polymerisation of compounds containing in each case at least one ethylenic double bond, and the compounds containing in each case at least one ethylenic double bond are selected from a group acrylic acid and its derivatives, methacrylic acid and its derivatives, styrene and its derivatives, alkenes and their derivatives, and halogenated alkenes and their derivatives, comprising:
(a) Mixing of cellulose with a tertiary amine oxide compound and water;
(b) Chemical bonding of the chemical residues to the cellulose contained in the mixture, with the formation of the regenerated cellulose modified with the covalent bonded chemical residues;
(c) Precipitation of the modified regenerated cellulose obtained in (b) out of the mixture.

4. Method according to claim 3, **characterised in that** the tertiary amine oxide compound is N-methylmorpholine-N-oxide.

5. Method according to any one of claims 3 and 4, **characterised in that** the chemical residues contain in each case at least one covalent bonded linker, which is enabled by electromagnetic radiation to produce a biradical.

6. Method according to claim 5, **characterised in that** the at least one linker is formed by benzoyl phenyl.

7. Method according to claim 6, **characterised in that** the polymer residues are chemically bonded to the cellulose under the effect of ultraviolet radiation.

8. Method according to any one of claims 3 to 7, **characterised in that** at least one of the chemical residues contains a covalently bonded chemical residue enabled to become luminescent.

9. Method according to any one of claims 3 to 8, **characterised in that** the modified regenerated cellulose is precipitated with water out of the mixture.

10. Method according to any one of claims 3 to 9, **characterised in that** mixture containing the modified regenerated cellulose is cast onto a porous carrier, such that the modified regenerated cellulose is precipitated out of the mixture, wherein a leaf-like product (B) is formed.

11. Use of the regenerated cellulose produced with the method according to any one of claims 3 to 10, which is modified with covalent bonded chemical residues, as a carrier material (110) in a value or security product (100).

12. Fiberless paper material from regenerated cellulose modified with covalent bonded chemical residues,
**characterised in that** the chemical residues are compound residues of polymers, which are obtained by radical polymerisation of compounds containing in each case at least one ethylenic double bond, wherein the compounds containing in each case at least one ethylenic double bond are selected from a group acrylic acid and its derivatives, methacrylic acid and its derivatives, styrene and its derivatives, alkenes and their derivatives, and halogenated alkenes and their derivatives.

## Revendications

1. Produit de valeur ou de sécurité (100), présentant un matériau de support (110), qui est fabriqué en une cellulose régénérée modifiée avec des résidus chimiques liés de façon covalente,
**caractérisé en ce que** les résidus chimiques sont des résidus de composés de polymères, qui sont obtenus par polymérisation radicale de composés contenant respectivement au moins une double liaison éthylénique, dans lequel les composés contenant respectivement au moins une double liaison éthylénique sont sélectionnés dans un groupe comprenant l'acide acrylique et ses dérivés, l'acide méthacrylique et ses dérivés, le styrène et ses dérivés, l'alcène et ses dérivés ainsi que l'alcène halogéné et ses dérivés.

2. Cellulose régénérée modifiée avec des résidus chimiques liés de façon covalente, **caractérisée en ce que** les résidus chimiques sont des résidus de composés de polymères, qui sont obtenus par polymérisation radicale de composés contenant respectivement au moins une double liaison éthylénique, dans lequel les composés contenant respectivement au moins une double liaison éthylénique sont sélectionnés dans un groupe comprenant l'acide acrylique et ses dérivés, l'acide méthacrylique et ses dérivés, le styrène et ses dérivés, l'alcène et ses dérivés ainsi que l'alcène halogéné et ses dérivés.

3. Procédé de fabrication de cellulose régénérée modifiée avec des résidus chimiques liés de façon covalente, dans lequel les résidus chimiques sont des résidus de composés de polymères, qui sont obtenus par polymérisation radicale de composés contenant respectivement au moins une double liaison éthylénique et les composés contenant respectivement au moins une double liaison éthylénique sont sélectionnés dans un groupe comprenant l'acide acrylique et ses dérivés, l'acide méthacrylique et ses dérivés, le styrène et ses dérivés, l'alcène et ses dérivés ainsi que l'alcène halogéné et ses dérivés, comprenant :
(a) le mélange de cellulose avec un composé oxyde d'amine tertiaire et de l'eau ;
(b) la liaison chimique des résidus chimiques à la cellulose contenue dans le mélange en formant la cellulose régénérée modifiée avec les résidus chimiques liés de façon covalente ;
(c) la précipitation de la cellulose régénérée modifiée obtenue dans (b) à partir du mélange.

4. Procédé selon la revendication 3, **caractérisé en ce que** le composé oxyde d'amine tertiaire est N-méthylmorpholine-N-oxyde.

5. Procédé selon l'une quelconque des revendications 3 et 4, **caractérisé en ce que** les résidus chimiques contiennent respectivement au moins un lieur lié de façon covalente, qui est capable de générer un biradical par rayonnement électromagnétique.

6. Procédé selon la revendication 5, **caractérisé en ce que** l'au moins un lieur est formé à l'aide de benzoylphényl.

7. Procédé selon la revendication 6, **caractérisé en ce que** les résidus de polymère sont liés chimiquement à la cellulose sous l'effet du rayonnement ultraviolet.

8. Procédé selon l'une quelconque des revendications 3 à 7, **caractérisé en ce qu'**au moins un des résidus chimiques contient un résidu chimique lié de façon covalente apte à la luminescence.

9. Procédé selon l'une quelconque des revendications 3 à 8, **caractérisé en ce que** la cellulose régénérée modifiée est précipitée avec de l'eau à partir du mélange.

10. Procédé selon l'une quelconque des revendications 3 à 9, **caractérisé en ce que** le mélange contenant la cellulose régénérée modifiée est coulé sur un support poreux de sorte que la cellulose régénérée modifiée est précipitée à partir du mélange, dans lequel un produit en feuille (B) se forme.

11. Utilisation de cellulose régénérée fabriquée avec le procédé selon l'une quelconque des revendications 3 à 10, qui est modifiée avec des résidus chimiques liés de façon covalente, en tant que matériau de support (110) dans un produit de valeur ou de sécurité (100).

12. Matière du type papier sans fibres en cellulose régénérée modifiée avec des résidus chimiques liés de façon covalente,
**caractérisé en ce que** les résidus chimiques sont des résidus de composés de polymères, qui sont obtenus par polymérisation radicale de composés contenant respectivement au moins une double liaison éthylénique, dans lequel les composés contenant respectivement au moins une double liaison éthylénique sont sélectionnés dans un groupe comprenant l'acide acrylique et ses dérivés, l'acide méthacrylique et ses dérivés, le styrène et ses dérivés, l'alcène et ses dérivés ainsi que l'alcène halogéné et ses dérivés.
